# EUROPEAN PATENT APPLICATION

(11) **EP 4 782 574 A2**
(43) Date of publication of application: **29.07.2026**
(21) Application number: 26151793.2
(22) Date of filing: 14.01.2026
(51) Int. Cl.: C25B 1/01, C25B 9/19, B01D 53/32, B01D 53/62

(54) **CARBON DIOXIDE CAPTURE SYSTEM**

(30) Priority: 27.01.2025 US 202519038130
(71) Applicant: Robert Bosch GmbH, 70442 Stuttgart (DE)
(72) Inventor: Baldizzone, Claudio, 70174 Stuttgart (DE); Schmidt, Helmut, 74321 Bietigheim-Bissingen (DE); Craig, Nathan P., Sunnyvale, CA 94087 (US); Gorlin, Yelena, Menlo Park, CA 94025 (US)
(74) Representative: Isarpatent

(57) **Abstract**

A CO₂ capture system includes an electrochemical cell having a cathode including an anion-conducting ionomer, an anode, spaced apart from the cathode, by an anion exchange membrane, the anode including a support material with an electrocatalyst and a proton-conducting ionomer, and the anion exchange membrane and the anode forming a bipolar interface configured to recombine protons, generated at the anode, and (bi)carbonates, generated at the cathode to capture CO₂.

## Description

### TECHNICAL FIELD

The present disclosure relates to systems and methods for capturing of atmospheric carbon dioxide (CO₂) using an electrochemical cell with an acidic anode and a method of extending lifetime of the anode.

### BACKGROUND

CO₂ is a notorious greenhouse gas whose emissions have been sharply on the rise since the Industrial Revolution began in the 18^{th} century. Since then, CO₂ emissions have been a confirmed culprit in climate change around the world. Recent findings of the International Panel on Climate Change have proposed that CO₂ emissions should be halved by 2030 to avoid further negative impact on the planet. Various technologies have been developed to capture CO₂ such as atmospheric CO₂, but their drawbacks prevent realization of more widespread CO₂ sequestration.

### SUMMARY

In one or more embodiments, a CO₂ capture system is disclosed. The system may include an electrochemical cell having a cathode including an anion-conducting ionomer; an anode, spaced apart from the cathode, by an anion exchange membrane, the anode including a support material with an electrocatalyst and a proton-conducting ionomer. The anion exchange membrane and the anode form a bipolar interface configured to recombine protons, generated at the anode, and (bi)carbonates, generated at the cathode to capture CO₂. The system may be configured to reduce concentration of CO₂ of air entering the system while maintaining pH at the anode in a range of 1 to 6.3 during operation. The anode may include one or more metal hydrides. The electrochemical cell may be a fuel cell. The system may be a continuously-operating system. The system may be a direct air capture system. The anode may be acidic from beginning of life (BOL) to end of life (EOL). The cell may be free of a bipolar interface at the cathode.

In another embodiment, an electrochemical cell of a CO₂ capture system is disclosed. The electrochemical cell may include a cathode including an anion-conducting ionomer; an anode including a proton-conducting ionomer and an anode catalyst layer; an anion exchange membrane spatially separating the cathode and the anode; and a bipolar interface formed by the anode catalyst layer and the anion exchange membrane. The cell is configured to sequester CO₂ from an air influx into the cathode. The anode may include a metal hydride. The anode may be acidic. A pH gradient may occur in the bipolar interface and not in the anode. The cell may operate continuously. The system may be a direct air capture system. Pure CO₂ may be generated at the anode.

In yet another embodiment, a method of operating a CO₂-capture electrochemical cell is disclosed. The method may include providing a bipolar interface of an anion exchange membrane and an anode including a proton-conducting ionomer in the electrochemical cell; recombining protons from the anode with (bi)carbonates from a cathode at the bipolar interface to initiate a pH gradient at the bipolar interface and maintain an acidic pH value at the anode while operating the electrochemical cell to reduce concentration of CO₂ incoming to the electrochemical cell. The operating may include continuously operating the electrochemical cell. The acidic pH value may be between 1 and 6.3. The method may also include reloading hydrogen into the anode. The method may also include supplying a liquid source of hydrogen to the anode.

### BRIEF DESCRIPTION OF THE DRAWINGS

FIGURE 1 is a schematic view of a prior art atmospheric CO₂ capture electrochemical cell;
FIGURES 2A and 2B are schematic views of non-limiting example atmospheric CO₂ capture electrochemical cells according to one or more embodiments disclosed herein; and
FIGURE 3 is a schematic view of another non-limiting example atmospheric CO₂ capture electrochemical cell according to one or more embodiments disclosed herein.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the disclosure. Practice within the numerical limits stated is generally preferred. Also, unless expressly stated to the contrary: percent, "parts of," and ratio values are by weight; the description of a group or class of materials as suitable or preferred for a given purpose in connection with the disclosure implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed. Unless stated otherwise, the wt.% is based on the total weight of the substrate and the vol.% is based on the total volume of the substrate.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. Generally, the term "about" denoting a certain value is intended to denote a range within +/- 5% of the value. As one example, the phrase "about 100" denotes a range of 100+/- 5, *i.e.* the range from 95 to 105. Generally, when the term "about" is used, it can be expected that similar results or effects according to the disclosure can be obtained within a range of +/- 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, or 5% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4, ..., 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. Similarly, whenever listing integers are provided herein, it should also be appreciated that the listing of integers explicitly includes ranges of any two integers within the listing.

In the examples set forth herein, concentrations, temperature, and reaction conditions (*e.g.,* pressure, pH, flow rates, *etc.*) can be practiced with plus or minus 50 percent of the values indicated rounded to or truncated to two significant figures of the value provided in the examples. In a refinement, concentrations, temperature, and reaction conditions (*e.g*., pressure, pH, flow rates, *etc.*) can be practiced with plus or minus 30 percent of the values indicated rounded to or truncated to two significant figures of the value provided in the examples. In another refinement, concentrations, temperature, and reaction conditions (*e.g.,* pressure, pH, flow rates, *etc.*) can be practiced with plus or minus 10 percent of the values indicated rounded to or truncated to two significant figures of the value provided in the examples.

As used herein, the term "and/or" means that either all or only one of the elements of said group may be present. For example, "A and/or B" means "only A, or only B, or both A and B". In the case of "only A," the term also covers the possibility that B is absent, *i.e.* "only A, but not B".

It is also to be understood that this disclosure is not limited to the specific embodiments and methods described below, as specific components and/or conditions may, of course, vary. Furthermore, the terminology used herein is used only for the purpose of describing particular embodiments of the present disclosure and is not intended to be limiting in any way.

The term "comprising" is synonymous with "including," "having," "containing," or "characterized by." These terms are inclusive and open-ended and do not exclude additional, unrecited elements or method steps. The term "including" or "includes" may encompass the phrases "comprise," "consist of," or "essentially consist of."

The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Also, the description of a group or class of materials as suitable for a given purpose in connection with one or more embodiments implies that the group or class of materials can "comprise," "consist of," and/or "consist essentially of" any member or the entirety of that group or class of materials. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

Many are targeting global net zero carbon emissions to avoid, lessen, or mitigate human impact on climate. One developing technology that may be useful to achieve the reduction of carbon emissions is carbon capture utilization and storage (CCUS). Conventionally, this involves a process of separating carbon emissions such as CO₂ before they are released into the atmosphere for storage or further utilization which may also be referred to as point source carbon capture (PSCC). These technologies often rely on higher concentration of CO₂ at the source of carbon emissions. For example, these techniques may be common among oil and gas companies, or energy companies involved in extracting and/or burning fossil fuels. For example, flue gas may be a point source of carbon emissions. PSCC technologies may be built into certain combustion technologies or be more appropriate for existing industrial facilities such as power plants.

Alternatively, atmospheric carbon capture or direct air capture (DAC) of carbon emissions such as CO₂ may be used to offset emissions in industries where it may be more difficult to abate or prevent release (*i.e.,* hard-to-abate sectors) such as the transportation industry (*e.g.,* shipping and aviation). DAC is an important emerging technology for realizing net zero carbon emissions. In some respects, DAC can be more challenging because it involves extracting carbon emissions such as CO₂ at ambient conditions (e.g., temperatures, pressure, concentrations) that are much lower than PSCC techniques.

Differences between PSCC and DAC generally make PSCC technologies inapplicable to DAC and vice versa. For example, technologies employed for PSCC capture may have slow kinetics under ambient conditions which renders them inefficient or futile for DAC. Additionally, storage and/or further utilization of captured carbon (e.g., CO₂) has conventionally been limited to PSCC capture because efficiently extracting sufficient quantities from ambient air makes storage and further utilization difficult and/or expensive. In yet another example, DAC technologies may be implemented as large-scale facilities whereas PSCC technologies may be retrofitted to existing facilities.

Among the various strategies proposed to execute the capture of CO₂ emissions, certain systems use electrochemical processes or electrochemical carbon capture. Such systems utilize electricity to drive a chemical rection that selectively binds CO₂ molecules from a gas stream. The system often includes an electrolyte, redox-active substances that can switch between oxidized and reduced states, pH manipulation of the solution through electrolysis, or the like.

In a traditional approach, an anion exchange membrane electrochemical cell may be used to capture CO₂ at the cathode, pump it across an anion exchange membrane in the form of carbonate anions, bicarbonate anions, or both, and release CO₂. The carbon species proceed via the anion exchange membrane to the anode or a middle compartment between the electrodes, where the carbon species react with an oxidation product from the anode to form one or more exit product(s) such as CO₂ and water. In such a cell, traditionally, both cathode and anode may be electrodes including anion exchange ionomers which attract negatively charged ions. Thus, the entire system relies on anion exchange resins in either a membrane or ionomer form. The anode may include a hydroxide-conducting ionomer having a polymer such as polysulfone and a functional group such as quaternary ammonium.

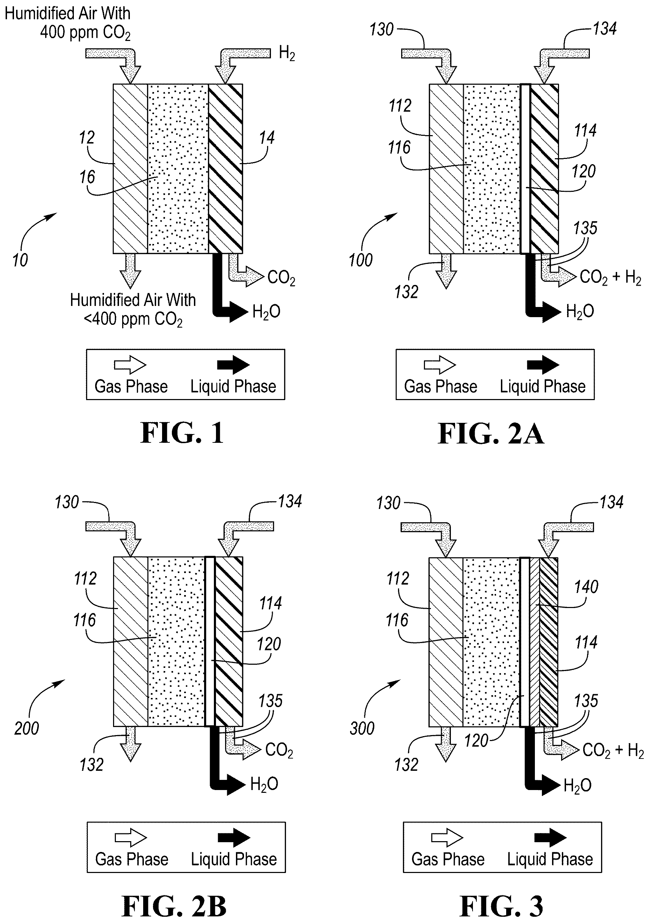

A non-limiting example of a traditional electrochemical cell is shown in Fig. 1. The cell 10 includes a cathode 12, anode 14, and an anion exchange membrane 16 separating the cathode 12 and the anode 14. Both the cathode 12 and anode 14 are electrodes with an anion exchange ionomer.

In the traditional systems, pH gradient, or change between pH levels, happens at the anode. pH at the anode may fluctuate from basic to acidic. The high pH edge and the low pH edge of the pH gradient may be defined by the change in the chemical composition of the anion exchange membrane from construction to operation. The anode may be constructed (BOL) with hydroxide anions (OH⁻) and having pH of about 14. The chemical composition changes to the steady-state composition of the anion exchange membrane during operation, including a mixture of OH⁻, bicarbonate ions (CO₃⁻²), and bicarbonate ions (HCO₃⁻). The low pH edge of the pH gradient may be triggered during operation. During the release of CO₂ from the carbon species, protons (H⁺) generated at the anode are involved in the reaction. Protons directly influence pH of a system as a higher concentration of protons results in a more acidic (lower) pH of the system. A formation of protons at the anode influences the local pH of the system, which is destabilized and fluctuates to a lower, acidic level. Such fluctuation is not desirable as it may accelerate corrosion and decrease lifetime of the system. Choice of materials is also more difficult for a system with fluctuating pH levels.

Therefore, there is a need to improve the electrochemical system to prevent pH fluctuation on the anode side.

In one or more embodiment, a CO₂ capture system is disclosed. The system is arranged to capture CO₂ from air, atmosphere. The system may be a system structured to sequester CO₂ from dilute sources. The capture may be direct capture. The system may be a DAC system. The CO₂ may be anthropogenic CO₂, legacy CO₂, naturally produced CO₂, CO₂ from various sources such as decomposition CO₂, ocean release CO₂, respiration CO₂, industrial sources CO₂, deforestation CO₂, fossil fuel burning CO₂, transportation CO₂, fuel combustion CO₂, exhaust CO₂, the like, or their combination. Other sources of CO₂ may also be suitable for sequestration as described herein.

The system may be a system structured to sequester CO₂ from concentrated sources such as sources at which CO₂ is produced. The sources may include CO₂ from a power plant, industrial facility such as cement production, oil refining, or the like. The system may be a PSCC system.

The mechanism for sequestering CO₂ disclosed herein may occur through electrochemical reactions. The system may be an electrochemical cell such as a fuel cell, an electrolyzer, or an electrochemical pump. In a non-limiting example, the system may be an electrochemical pump in a fuel cell configuration (proton source may be hydrogen gas, methanol, ethanol, formic acid, hydride). In another non-limiting example, the system may be an electrochemical pump in an electrolyzer configuration (proton source may be water). The system may be a continuously operating system. Alternatively, the system may operate with one or more interruptions, pauses, stops such that the system is a discontinuously operating system.

The system is structured to lower concentration of CO₂ in an incoming air stream from a first concentration to a second concentration. The first concentration may be about 200, 300, 400, or more ppm of CO₂ in case of DAC or above 10,000, 12,000, 13,000, 14,000, 15,000, 40,000, 50,000, 100,000, 150,000, or more ppm in case of PSCC. The second concentration is lower than the first concentration.

The system may have one or more portions, stages, states, or a combination thereof. The system includes several components. The various components described herein may cooperate mechanically, physically, chemically, fluidly, or a combination thereof, such that they are described as being in mechanical, chemical, and/or fluid communication to achieve the structure, functions, examples described herein. Non-limiting examples of the systems disclosed herein are shown in Figs. 2A, 2B, and 3.

The system may include at least one electrochemical cell. The system may include more than one cell such as 2, 3, 4, 5, 6, 7, 8, 9, 10, or more electrochemical cells. The cells may be identical, similar, or different with respect to their dimensions, shape, chemistry, components, or their combination.

Besides the cells, the system may include inlets and outlets leading to, from, and/or between the cells structured to lead fluids such as a liquid phase or gas phase. A non-limiting example inlet may be an inlet of air stream with a first CO₂ concentration to a cathode portion, an outlet of air stream with a second CO₂ concentration from the cathode portion. Another non-limiting example inlet may be a hydrogen source inlet to the anode. Another non-limiting example outlet may be a fluid outlet from the anode. The inlets and outlets may include pipes, tubes, apertures between objects, or their combination.

The cell may include a number of compartments such as a cathode, an anode, a middle compartment dividing the cathode and the anode including a membrane. The cell may additionally include a catalyst layer at the anode.

The membrane may be an anion exchange membrane. While at assembly, the membrane may be an anion exchange membrane, during operation, the membrane will be converted to (bi)carbonate. The anion exchange membrane may include a polymer such as polysulfone and a functional group such as quaternary ammonium.

At the anode, protons (H+) may be generated through oxidation of a source of hydrogen such as gaseous hydrogen. Alternatively, the source of protons may be a liquid source of hydrogen such as an aqueous solution of methanol, ethanol, formic acid, or the like. Alternatively still, the source of hydrogen may include an acidic solution of water, a strong acid, and methanol, ethanol, formic acid, or the like. The strong acid may include sulfuric acid, phosphoric acid, perchloric acid, hydrochloric acid, or the like. At the anode, the hydrogen source may be oxidized into hydrogen protons and electrons.

The recombination of the (bi)carbonate ions within the cell takes place at the anode-membrane interface. The hydroxide ions, generated at the cathode, capture CO₂ in the form of (bi)carbonates, which are pumped or transported across the anion exchange membrane to the bipolar interface with the anode. The bipolar interface is a set of points, boundary, dividing line, or a junction, where two systems meet and interact. The bipolar interface is a boundary, where the physical edge of the anode including the proton-conducting ionomer meets the edge of the anion-exchange membrane of the middle compartment. As the (bi)carbonate ions from the cathode enter the bipolar interface and recombine with the protons, (bi)carbonates are converted to carbonic acid from which CO₂ is evolved:

H₂ + CO₃²⁻ → 2e⁻ + H₂CO₃ → 2e⁻ + CO₂ + H₂O

The anode may be acidic. The acidic anode helps with maintaining a desirable pH level, preventing or minimizing pH fluctuations, and thus helps sustain or prolong lifetime of the system, cell, and components within the cell or system. The choice of materials is streamlined in a system which maintains pH of its components in comparison to a system with pH fluctuations. Additionally, the kinetics of hydrogen oxidation (proton production) of the system may be faster in an acidic environment. The faster kinetics are desirable especially in the PSCC system. Further still, the acidic anode promotes reliable and continuous separation of CO₂.

The pH value at the anode may be that of a weak acid or a strong acid. The pH value at the anode may be about or less than about 6.35, 6, 5.5, 5, 4.5, 4, 3.5, 3, 2.5, 2, 1.5, or 1. The pH value at the anode, in the bulk anode region, may remain substantially the same throughout the lifetime, operation, or both of the anode and/or the cell. The bulk anode region relates to the main body of the anode without the anode-membrane interface. The pH value of the anode may be substantially the same as the beginning of life (BOL) and the end of life (EOL). The pH at the anode may thus be a fixed pH, or a pH of a substantially the same value from BOL to EOL, including operation.

Carbonic acid is part of the anodic reactions. The pKa value of carbonic acid is 6.35. The pKa is relevant because if pH is greater than 6.35, the CO₂ stays as bicarbonate and does not transform to carbonic acid. Once pH drops below 6.35, the equilibrium changes from bicarbonate to carbonic acid. Because the solubility of carbonic acid in water is much smaller than that of bicarbonate or carbonate, the pH change causes transition to carbonic acid and most CO₂ comes out of the solution as gas, which is a desirable result of the herein-disclosed systems. The pH of the anode is thus set below 6.35 to encourage formation of CO₂ gas.

Unlike in the traditional systems, the pH gradient in the herein-disclosed systems occurs in the bipolar interface, not in the anode bulk region, at the anode electrocatalyst, in the catalyst layer, or a combination thereof. In the bipolar interface, the high pH edge may be defined by the change of chemical composition of the anion-exchange membrane having OH⁻ groups and basic pH at construction (BOL) to the chemical composition during operation having a mixture of OH⁻, CO₃⁻², and HCO₃⁻. The low pH edge of the bipolar interface may be defined by the cation-exchange ionomer of the anode, having acidic pH at construction (BOL), as discussed above.

The pH gradient is thus limited to the bipolar interface instead of the electrocatalyst at the anode, the anode bulk region, or both. Hence, the bulk anode region, the electrocatalyst, and the catalyst layer are expected to maintain substantially the same pH level from BOL to EOL.

The anode may be free of a hydroxide-conducting material, but rather include a proton-conducting material such as a proton-conducting ionomer. The proton-conducting ionomer may be an ionomer with acidic functional groups such as sulfonic acid groups attached to a polymer backbone, which create sites for protons to bind. A non-limiting example of a proton-conducting ionomer includes sulfonated tetrafluoroethylene based fluoropolymer-copolymer, polyaromatic-based ionomers such as sulfonated phenylated poly-phenylene, polystyrene-based ionomer with sub-nanometer-sized cavities such as PS-calix, aromatic polymer-based ionomers, sulfonated poly(ether ether ketone), or the like.

The anode may additionally include a material or material(s) suitable or configured for hydrogen oxidation reaction, methanol oxidation reaction, ethanol oxidation reaction, carbonic acid oxidation, *etc.* in an acidic environment. The anode material may include an electrocatalyst such as platinum (Pt), palladium (Pd), ruthenium (Ru), rhodium (Rh), iridium (Ir), molybdenum sulfide (MoS₂), platinum-ruthenium alloy, palladium-ruthenium alloy, palladium-gold alloy, palladium-platinum alloy, or a mixture of thereof. Specifically, for the liquid proton sources, the material may include platinum-ruthenium alloy, palladium-ruthenium alloy, palladium-gold alloy, palladium-platinum alloy, platinum, palladium, ruthenium, rhodium, iridium, or a mixture thereof.

The electrocatalyst may be supported on high surface area carbon. The high surface area carbon may be an activated carbon with a very large surface area per unit mass. The high surface area may be more than about 3000 m²/gram of the material. The high surface area carbon may include a highly porous structure on a microscopic scale.

The anode may thus include an electrocatalyst on a support mixed with a proton-conducting ionomer.

Alternatively, the anode may include a metal hydride. Non-limiting examples of the metal hydrides may include one or more of palladium hydride (PdHx), titanium hydride (TiHx), zirconium hydride (ZrHx), vanadium hydride (VHx), iron hydride (FeHx), nickel hydride (NiHx), cobalt hydride (CoHx), magnesium hydride (MgHx), lanthanum hydride (LaHx), yttrium hydride (YHx), or their combination. The metal hydride may succumb to depletion throughout operation and may require reformation after depletion either through introduction of hydrogen gas or electrochemically via water electro-reduction to hydrogen. Operation of the system may thus be interrupted to reload the metal hydride electrode with hydrogen.

The anode-membrane interface is a bipolar interface. The bipolar interface refers to a junction or boundary between the membrane and the anode, where components of contrasting electrical chargers on either side of the interface meet and react. The anode-membrane interface may include a direct contact of the anode and the membrane. Such contact may be free of an additional layer or material such as a catalyst layer. Alternatively, the anode-membrane interface may include a relatively thin catalyst layer to facilitate the recombination of the protons with the (bi)carbonate ions. The catalyst layer may be about 1-100, 5-80, or 10-60 nm thick. The catalyst layer may be about 1, 2, 3, 4, 5, 6, 7, 8, 9, 10, 15, 20, 25, 30, 35, 40, 45, 50, 55, 60, 65, 70, 75, 80, 85, 90, or 95 nm thick. The anode-membrane interface may include metal oxide, graphene oxide, or both.

At the cathode, hydroxide anions (OH⁻) may be generated through oxygen reduction reaction from the air stream carrying carbon and CO₂. The hydroxide anions then react with CO₂ to form carbonate, bicarbonates, or both to be transported across the membrane.

The cathode may include an electrocatalyst on a support mixed with an anion exchange ionomer such as hydroxide-conducting ionomer. The hydroxide-conducting ionomer may include an aromatic polymer such as polysulfone or polystyrene with a quaternary ammonium. Other types of hydroxide-conducting ionomers are contemplated, and the type of the hydroxide-conducting ionomer is not particularly limited.

The cathode may also include materials suitable for or configured for oxygen reduction reaction in an alkaline environment. The electrocatalyst may include platinum, palladium, ruthenium, iridium, silver, manganese oxide, nickel oxide, cobalt oxide, or a mixture thereof.

The electrocatalyst may be supported on high surface area carbon. The high surface area carbon may be an activated carbon with a very large surface area per unit mass. The high surface area may be more than about 3000 m²/g of the material. The high surface area carbon may include a highly porous structure on a microscopic scale.

The cell does not have a bipolar interface at the cathode. The cathode anion exchange membrane interface is not a bipolar interface. Rather, both the cathode and the anion exchange membranes may include the same materials and have the same effect on anions. Both the cathode and the anion exchange membrane conduct anions.

A non-limiting example cell 100 with a cation exchange ionomer in the acidic anode 114 is shown in Fig. 2A. The cell 100 includes a cathode 112, which includes an anion exchange ionomer, the herein-disclosed anode 114, and an anion exchange membrane 116 spatially separating the cathode 112 from the anode 114. The bipolar interface, formed by the anion exchange membrane 116 and the anode 114 is shown at 120.

Various inlets and outlets are also depicted. Specifically, the air with a first CO₂ concentration c₁ is entering the cell 100 at the cathode via an inlet 130. The cell 100 may further include an outlet 132 structured to remove air with a second CO₂ concentration c₂, where c₁ > c₂. The cell 100 may also include an inlet 134 configured for ingress of the proton source such as gaseous hydrogen or a liquid source named herein. The cell 100 may additionally include one more outlets 135 configured to remove CO₂, H₂, H₂O, O₂ or their combination.

Another non-limiting example cell 200 is shown in Fig. 2B. The cell of Fig. 2B may include one or more metal hydrides in the anode 114. While the components and compositions of the system 200 may otherwise remain the same as in Fig. 2A, the reactions at the anode lead to production of pure CO₂ instead of a mixture of CO₂ with H₂, as is depicted at an outlet 135.

Another non-limiting example of a cell 300 disclosed herein is shown in Fig. 3. While the components and compositions of the system 300 may otherwise remain the same as in Figs. 2A or 2B, the cell 300 includes a catalyst layer 140 at the anode 114. The anode-membrane interface 120 is thus formed by the catalyst layer-membrane interface. Such arrangement may be especially beneficial if the incoming air has higher concentrations of CO₂, for example >0.04% or 400 ppm, especially if the concentrations are >1% or 10,000 ppm, >4% or 40,000 ppm, >5 or 50,000 ppm, or >15% or 150,000 ppm such as in the PSCC systems. The catalyst layer 140 may assist with the recombination which could otherwise become limiting.

The PSCC system may additionally need a component providing air or oxygen to supply sufficient concentration of oxygen to allow oxygen reduction reaction to occur. Additionally, the PSCC system may operate at higher current densities than a DAC system.

A method of operating a CO₂ capture system is disclosed herein. The operating may include maintaining substantially the same pH at the anode in an electrochemical cell of a carbon sequestration system. The method may include providing a bipolar interface of an anion exchange membrane and an anode including a proton-conducting ionomer in the electrochemical cell. The method may include recombining protons from the anode with (bi)carbonates from a cathode at the bipolar interface to initiate a pH gradient at the bipolar interface and maintain an acidic pH value at the anode while operating the electrochemical cell to reduce concentration of CO₂ incoming to the electrochemical cell.

The operating may include continuous operation, meaning without having to replace or reload components of the system. The operating may be discontinuous. The method may include reloading the anode with hydrogen, including water electro-reduction to hydrogen.

The method may include utilizing chemical composition of the anode disclosed herein to maintain a substantially the same pH level, value, or range at the anode within the pH numerals disclosed herein, from BOL to EOL. The method may include minimizing, eliminating, or reducing pH fluctuations at the anode or bulk anode region by providing an anode-membrane interface with the chemical composition disclosed herein.

The method may utilize pumping hydroxide ions in the form of (bi)carbonate to the bipolar interface of the anion exchange membrane and the acidic anode disclosed herein. The method may include generating protons at the anode from a gaseous source of a liquid source. The method may include recombining the protons and (bi)carbonates at the bipolar interface, not in the bulk anode. The method may include generating CO₂ at the anode-membrane interface as pure CO₂, as a mixture of CO₂ and H₂, or as a mixture of CO₂ and O₂.

### Examples

### Examples 1a-1c

In Examples 1a-1c the cathode, anode, membrane, and anode-membrane interface may include materials disclosed above. Specifically, the following materials were used in the electrochemical cell of Examples 1a-1c. The cathode included platinum supported on carbon mixed with a hydroxide-conducting ionomer. The anode included platinum supported on carbon mixed with a proton-conducting ionomer. The membrane was an anion exchange membrane at assembly which was converted to (bi)carbonates during operation.

Example 1a did not include a thin catalyst layer at the anode-membrane interface. Example 1b included a thin (1-100 nm) catalyst layer of metal oxide at the interface to facilitate recombination of protons and (bi)carbonates. Example 1c included a thin (1-100 nm) catalyst layer of graphene oxide at the interface to facilitate recombination of protons and (bi)carbonates.

The source of protons in Example 1a-1c was gaseous hydrogen.

Anodic reactions were as follows:

H₂ → 2H⁺ + 2e⁻

2H⁺ + CO₃²⁻ → H₂CO₃

H₂CO₃ → CO₂ + H₂O

Overall reaction: H₂ + CO₃²⁻ → 2e⁻ + H₂CO₃ → 2e⁻ + CO₂ + H₂O
Cathodic reactions were as follows:

1/2O₂ + H₂O + 2e⁻ → 2OH⁻

2OH⁻ + CO₂ → OH⁻ + HCO₃⁻ → CO₃²⁻ + H₂O

Overall reaction: 1/2O₂ + H₂O + 2e⁻ + CO₂ → OH⁻ + HCO₃⁻ → CO₃²⁻ + H₂O
During the cathodic reactions, excess OH⁻ may be produced such that not all OH⁻ react with CO₂ in air. In the reactions above, HCO₃⁻ is bicarbonate and CO₃²⁻ is carbonate.

In Examples 1a-1c, the pH at the anode remained within a predetermined acidic range of values below 6.3.

### Example 2a-2d and 2a'-2c'

Examples 2a-2c and 2a'-2c' included an electrochemical pump in a fuel cell configuration. Examples 2d and 2d' included an electrochemical pump in an electrolyzer configuration.

In Examples 2a-2d and 2a'-2c', the cathode, anode, membrane, and anode-membrane interface may include materials disclosed above. Specifically, the following materials were used in the electrochemical cell of Examples 2a-2d and 2a'-2c'. The cathode included platinum supported on carbon mixed with a hydroxide-conducting ionomer in Examples 2a-2d and 2a'-2c'.

The anode included platinum supported on carbon mixed with a proton-conducting ionomer in Examples 2a and 2a', palladium supported on carbon mixed with a proton-conducting ionomer in Examples 2b and 2b', ruthenium supported on carbon mixed with a proton-conducting ionomer in Examples 2c and 2c' and iridium oxide mixed with a proton-conduction ionomer in Example 2d.

The membrane was an anion exchange membrane at assembly which was converted to (bi)carbonates during operation. Examples 2a, 2a', and 2d did not include a thin catalyst layer at the anode-membrane interface. Examples 2b and 2b' included a thin (1-100 nm) catalyst layer of metal oxide at the interface to facilitate recombination of protons and (bi)carbonates. Examples 2c and 2c' included a thin (1-100 nm) catalyst layer of graphene oxide at the interface to facilitate recombination of protons and (bi)carbonates.

Cathodic reactions were the same as in Examples 1a-1c.

The source of protons was a liquid source. Generation of protons (H⁺) for Examples 2a-2d was conducted through oxidation of a liquid source of hydrogen including an aqueous solution of methanol for Example 2a, ethanol for Example 2b, and formic acid for Example 2c. In the case of formic acid, addition of water is not required as formic acid forms CO₂ and 2H⁺.

Anodic reactions were as follows:
CH₃OH + H₂O → CO₂ + 6H⁺ + 6e⁻ for Example 2a;
CH₃CH₂OH + H₂O → CH₃COH + 2H⁺ + H₂O → CH₃COOH +2H⁺ for Example 2b;
HCOOH → CO₂ + 2H⁺ for Example 2c;
H₂O → ½ O₂ + 2H⁺ +2e⁻ for Example 2d.

Generation of protons (H⁺) of Examples 2a'-2c' was conducted through oxidation of a liquid source of hydrogen including an acidic solution of water, a strong acid, and methanol for Example 2a', ethanol for Example 2b', and formic acid for Example 2c'.

The strong acid used was sulfuric acid, but alternatives such as phosphoric acid, perchloric acid, or hydrochloric acid may also be used.

Anodic reactions were as follows:
CH₃OH + H₂O + H₂SO₄ → CO₂ + 6H⁺ + 6e⁻ + H₂SO₄ for Example 2a';
CH₃CH₂OH + H₂O + H₂SO₄ → CH₃COH + 2H⁺ + H₂O + H₂SO₄ → CH₃COOH +2H⁺+ H₂SO₄ for Example 2b'; and
HCOOH + H₂SO₄ → CO₂ + 2H⁺+ H₂SO₄ for Example 2c'.

In Examples 2a-2d and 2a'-2c', the pH at the anode remained within a predetermined acidic range of values below 6.3.

### Examples 3a-3c

In Examples 3a-3c, the cathode, membrane, and anode-membrane interface may include materials disclosed above. Specifically, the following materials were used in the electrochemical cell of Examples 3a-3c. The cathode included platinum supported on carbon mixed with a hydroxide-conducting ionomer in Examples 3a-3c.

The anode included metal hydrides in Examples 3a-3c. Example 3a included palladium hydride, Example 3b included titanium hydride, and Example 3c included zirconium hydride.

Cathodic reactions were the same as in Examples 1a-1c.

Generation of protons (H⁺) was through oxidation of the metal hydride (MH):

2MH → 2H⁺ + 2e⁻

2H⁺ + CO₃²⁻ → H₂CO₃

H₂CO₃ → CO₂ + H₂O

Overall reaction: 2MH + CO₃²⁻ → 2e⁻ + H₂CO₃ → 2e⁻ + CO₂ + H₂O
In Examples 3a-3c, the pH at the anode remained within a predetermined acidic range of values below 6.3. The inclusion of the metal hydride anode resulted in production of pure CO₂ as opposed to a mixture of H₂ and CO₂. As a drawback, the operation of the cell was interrupted to reload the metal hydride anode with hydrogen.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, *etc.* As such, to the extent any embodiments are described as less desirable than other embodiments or prior art implementations with respect to one or more characteristics, these embodiments are not outside the scope of the disclosure and can be desirable for particular applications.

## Claims

1. A CO₂ capture system comprising:
an electrochemical cell including
a cathode including an anion-conducting ionomer;
an anode, spaced apart from the cathode, by an anion exchange membrane, the anode including a support material with an electrocatalyst and a proton-conducting ionomer; and
the anion exchange membrane and the anode forming a bipolar interface configured to recombine protons, generated at the anode, and (bi)carbonates, generated at the cathode to capture CO₂.

2. The system of claim 1, wherein the system is configured to reduce concentration of CO₂ of air entering the system while maintaining pH at the anode in a range of 1 to 6.3 during operation.

3. The system of claim 1, wherein the anode includes one or more metal hydrides.

4. The system of claim 1, wherein the electrochemical cell is a fuel cell.

5. The system of claim 1, wherein the system is a continuously-operating system.

6. The system of claim 1, wherein the system is a direct air capture system.

7. The system of claim 1, wherein the anode is acidic from beginning of life (BOL) to end of life (EOL).

8. The system of claim 1, wherein the cell is free of a bipolar interface at the cathode.

9. An electrochemical cell of a CO₂ capture system, the electrochemical cell comprising:
a cathode including an anion-conducting ionomer;
an anode including a proton-conducting ionomer and an anode catalyst layer;
an anion exchange membrane spatially separating the cathode and the anode; and
a bipolar interface formed by the anode catalyst layer and the anion exchange membrane,
the cell being configured to sequester CO₂ from an air influx into the cathode.

10. The electrochemical cell of claim 9, wherein the anode includes a metal hydride.

11. The electrochemical cell of claim 9, where the anode is acidic.

12. The electrochemical cell of claim 9, wherein a pH gradient occurs in the bipolar interface and not in the anode.

13. The electrochemical cell of claim 9, wherein the cell operates continuously.

14. The electrochemical cell of claim 9, wherein the system is a direct air capture system.

15. The cell of claim 9, wherein pure CO₂ is generated at the anode.

16. A method of operating a CO₂-capture electrochemical cell, the method comprising:
providing a bipolar interface of an anion exchange membrane and an anode including a proton-conducting ionomer in the electrochemical cell;
recombining protons from the anode with (bi)carbonates from a cathode at the bipolar interface to initiate a pH gradient at the bipolar interface and maintain an acidic pH value at the anode while operating the electrochemical cell to reduce concentration of CO₂ incoming to the electrochemical cell.

17. The method of claim 16, wherein the operating includes continuously operating the electrochemical cell.

18. The method of claim 16, wherein the acidic pH value is between 1 and 6.3.

19. The method of claim 16, further comprising reloading hydrogen into the anode.

20. The method of claim 16, further comprising supplying a liquid source of hydrogen to the anode.
